# EUROPEAN PATENT SPECIFICATION

(11) **EP 3 742 930 B1**
(45) Date of publication and mention of the grant of the patent: **27.09.2023**
(21) Application number: 19702665.1
(22) Date of filing: 22.01.2019
(51) Int. Cl.: A47B 88/40, A47B 88/43, A47B 88/483, G07F 11/60

(54) **SUPPORT COMPONENT FOR A STORAGE SYSTEM**
STÜTZBAUTEIL FÜR EIN LAGERSYSTEM
COMPOSANT DE SUPPORT DESTINÉ À UN SYSTÈME DE STOCKAGE

(30) Priority: 23.01.2018 GB 201801044
(43) Date of publication of application: 02.12.2020
(73) Proprietor: Supply Point Systems Limited, Rugby, Warwickshire CV21 1DZ (GB)
(72) Inventor: CLARK, Iain, Rugby, Warwickshire CV21 1DZ (GB); VEIGA, Rafael, Rugby, Warwickshire CV21 1DZ (GB)
(74) Representative: Lewis Silkin LLP
(86) International application number: PCT/GB2019/050168
(87) International publication number: WO 2019/145696

(56) References cited:
- WO-A1-98/47410
- US-A- 5 775 786

## Description

### Field of the invention

The present invention relates to a support component for supporting a drawer in a storage cabinet. Specifically, it relates to a support component for supporting drawers in stock control systems well-known for use, for example in manufacturing and medical facilities or as vending machines.

### Background

In typical automated stock control systems, a storage cabinet comprises a plurality of latched drawers held between panels fixed between support beams. Articles to be supplied to users are provided in the drawers or compartments of the drawers. Examples of such articles include cutting tools and the like used with machine tools; other manufacturing tools and components; drugs, needles and other medical items; and legal documents. A control system allows a user to access the required article by unlatching the drawer containing the required article. The drawer is then pulled out from the home position (where no compartments are exposed) to the extent that the compartment containing the article is exposed, when the drawer is latched again to prevent further opening of the drawer.

In a known system, each panel includes two different types of supports for the drawers. A guide block is provided on one side and a support is provided on the other side such that each drawer is supported by a guide block mounted on one panel and a support mounted on an adjacent panel. As the cabinet is configured to hold drawers of different sizes, large-sized guide blocks and supports are needed to support a large drawer. Moreover, as the distance between the support and the adjoining end of the large drawer is greater than that for a standard drawer, the same support is unable to provide enough support to the large drawer. Therefore, two different sizes of supports are required to ensure stability of the drawer. However, using two different sizes of support needs additional stock and it also makes assembling more time consuming. Moreover, in the existing cabinet, the support is screwed to the side of the panel. This not only increases the cost of manufacturing but also the time needed to assemble and/or reconfigure the cabinet.

Therefore, there exists a need for a simpler and more cost-effective support that can support different sized drawers and helps to reduce the cost and assembly time for the cabinet.

US 5775786 discloses a drawer slide for a drawer-type storage unit allowing a drawer to be horizontally moved from the storage unit to allow access into the interior of the drawer. A cantilevered tongue, loop-like bracket, and latch are positioned on a support rail of the drawer slide. The tongue is receivable in a slot in a vertical mounting rail in the storage unit. The bracket is received in an opening of a vertical mounting rail. The latch engages a further slot in a vertical mounting rail to prevent accidental disengagement of the slide rail from the mounting rails. The vertical symmetry of the drawer slide allows the drawer slides to be used on either side of the storage unit with only a front and back orientation.

### Summary

The present invention has been made to address the problems of the prior art system. According to an aspect of the present invention, there is provided a support component as defined in appended independent claim 1.

Such a support component, when used on a panel in a storage system, can be easily attached and/or removed from the panel due to the resilience and flexibility offered by the resilient leg. The engagement protrusion aids in fixing the support component to the panel without the need of any screws or other fastening means. It saves time and effort in assembling a storage system which requires attaching several such support components to support a plurality of drawers. Moreover, the storage system can be re-configured by easily removing a support component from one point and fixing it at some other point on the system.

Preferably, the protruding peg is formed at the other end of the bar.

Preferably, the protruding peg is formed part way along the length of the bar and adjacent the resilient leg.

According to another aspect of the invention, there is provided a storage cabinet comprising at least one storage unit adapted to be held between panels mounted onto support beams; and the support component as described above, wherein the support component is adapted to be fixed to a side of at least one of the panels such that the storage unit is at least partially supported on the support component.

Preferably, in such a storage cabinet, at least one of the panels comprises an engagement notch adapted to contain the engagement protrusion formed in the resilient leg of the support component.

Preferably, at least one of the panels comprises at least one engagement slot adapted to engage with the protruding peg formed in the support component.

Preferably, the engagement notch and the engagement slot are colinear.

Preferably, each of the panels is adapted to hold a guide block on the side opposite the support component.

Preferably, the storage unit also comprises a projecting rib formed on the bottom surface of the storage unit such that the projecting rib is adapted to rest on the top of the support component attached to the panel.

The advantage of such a projecting rib is that it aids the drawer to rest comfortably on the support component irrespective of the size of the drawer. This allows the same type of support component to be used everywhere in the storage unit even when fitted with drawers of different sizes.

### Brief description of the drawings

Embodiments of the present invention will now be described by way of example only and with reference to the accompanying drawings, in which:
Fig. 1 is a perspective view of a storage system according to an aspect of the present invention;
Fig. 2 is a perspective view of a panel in the storage system shown in Fig. 1;
Fig. 3 is a perspective view of a support detached from the panel shown in Fig. 2;
Fig. 4 is a perspective view of the support being attached to one side of the panel;
Fig. 5 is a perspective view of the support fully attached to one side of the panel;
Figs. 6A is a front view of four standard-sized drawers supported on respective supports;

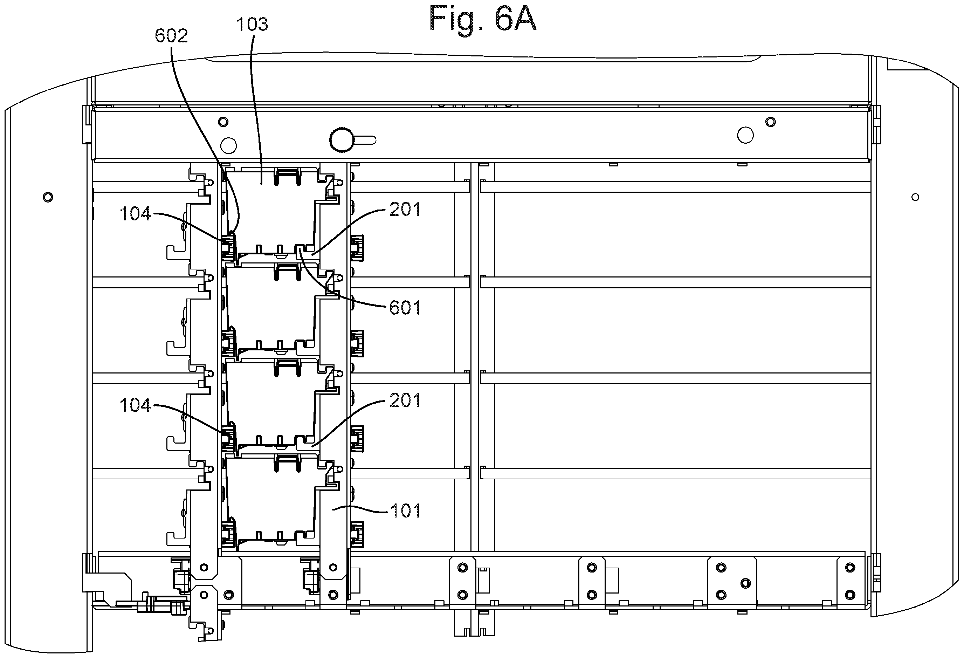

Figs. 6A is a front view of two large-sized drawers supported on respective supports.

### Detailed description

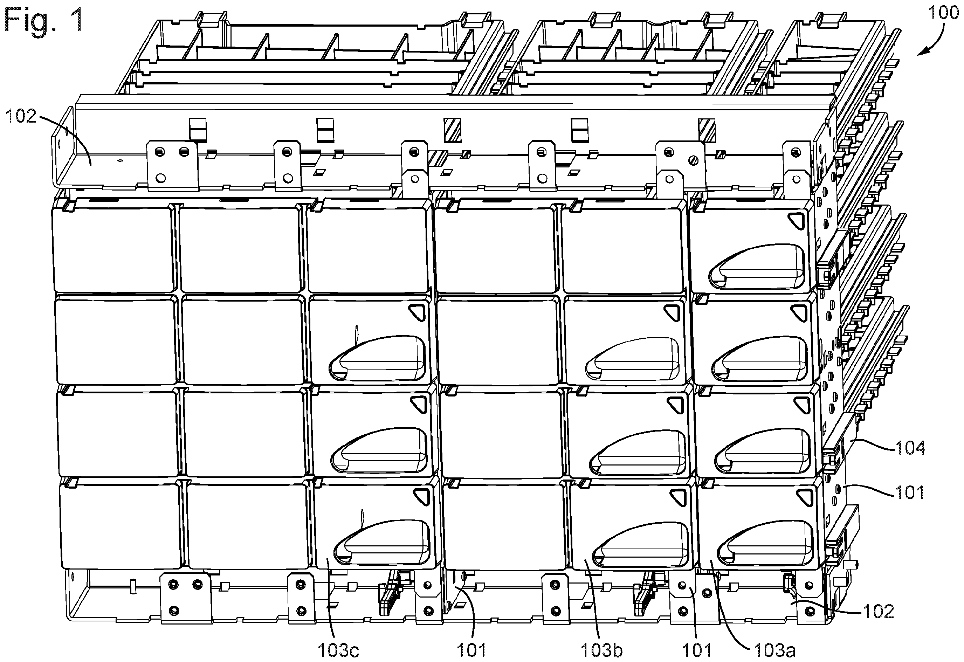

In the following specification, the terms front, back, rear, left, right, top, bottom, upper, lower and like terms will be used consistently with the arrangement shown in Fig. 1. In particular, the expression height corresponds to a dimension from top to bottom, width corresponds to a dimension from left to right and depth corresponds to a dimension from front to back. However, it is not limited to this orientation.

Fig. 1 shows a section of a storage cabinet 100. The cabinet 100 comprises a plurality of panels 101 positioned vertically in the cabinet 100 and supported between two support beams 102 held horizontally in the cabinet 100. The panels 101 are mounted between desired points on the support beams 102. The cabinet 100 also includes drawers 103 held between adjacent panels 101 in a stacked arrangement. The cabinet 100 is configured to hold drawers of different sizes. As shown in the figure, on the rightmost side, the cabinet 100 includes a set of four drawers 103a of single width size. Next to that, the cabinet 100 has a set of three drawers 103b of double width size, and thereafter a set of three drawers 103c of triple width size. Also, the topmost drawers of the drawer set 103b and 103c are twice the height of all other drawers in the cabinet 100. The figure also shows an exposed side of the panel 101 with a series of supports 104 attached to the visible rightmost panel 101.

It is to be understood that this is only one of the several possible configurations of the drawers 103 in the storage cabinet 100. The cabinet 100 is capable of holding drawers of different sizes and it is modular in nature to allow re-configuration when needed. Moreover, although not shown in the figure, the cabinet 100 also comprises control electronics and cabling and a mechanical chassis and covers on three sides to restrict any unauthorised access to the cabinet 100.

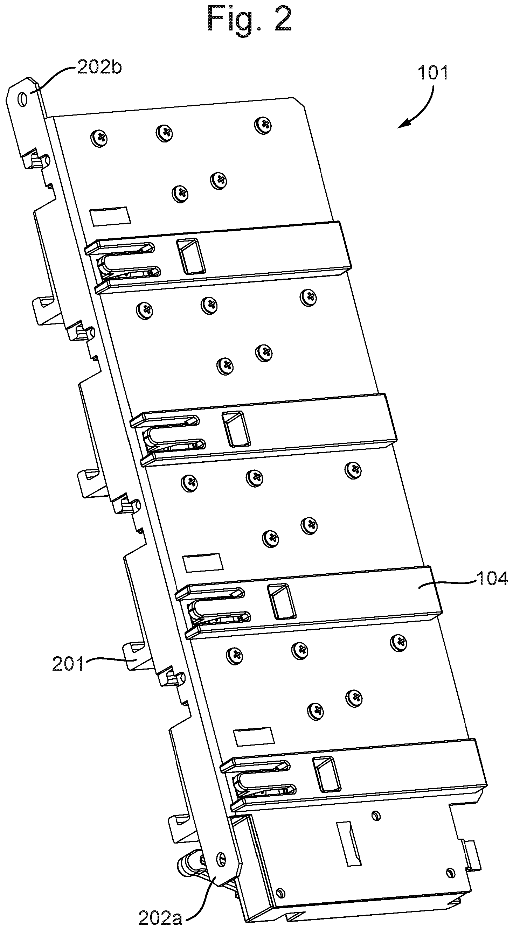

Fig. 2 shows one side of the panel 101. In the present embodiment, the panel 101 comprises an upright, which is substantially L-shaped in cross-section and is formed by a front plate extending in the width direction and back plate extending in the depth direction. The top and bottom ends of the panel 101 have engagement extensions 202a, 202b to engage with the support beams 102.

The panel 101 is configured to hold guide blocks 201 for holding drawers in a stacked arrangement. As shown in the figure, each panel 101 can hold up to four drawers arranged above one another on four guide blocks 201. The panel 101 also includes corresponding supports 104 provided on the other side of the panel 101. A drawer is held between two adjacent panels 101 such that it is supported by the guide block 201 provided on the right-hand side panel 101 and the corresponding support 104 providing on the adjacent left-hand side panel 101 (as shown in Fig. 1).

The panel 101 also includes control means (corresponding the guide blocks 201) to monitor when the drawer is in its fully closed position, the distance the drawer moves, and the direction of movement of the drawer. Any suitable control means known in the art, such as a solenoid-activated latch mechanism and sensors, may be used in the cabinet 100.

It is to be noted that as the cabinet 100 is suitable for holding drawers 103 of different sizes, the guide blocks 201 and the supports 104 can be removed to accommodate drawers of different sizes. For example, the second guide block 201 and the corresponding support 104 on the adjacent panel 101 can be removed to make space for a double-height drawer. To allow this, the panel 101 has engagement features formed at multiple points on its surface to fix the guide blocks 201 and the supports 104 for holding/supporting drawers of different sizes on both sides of the panel 101.

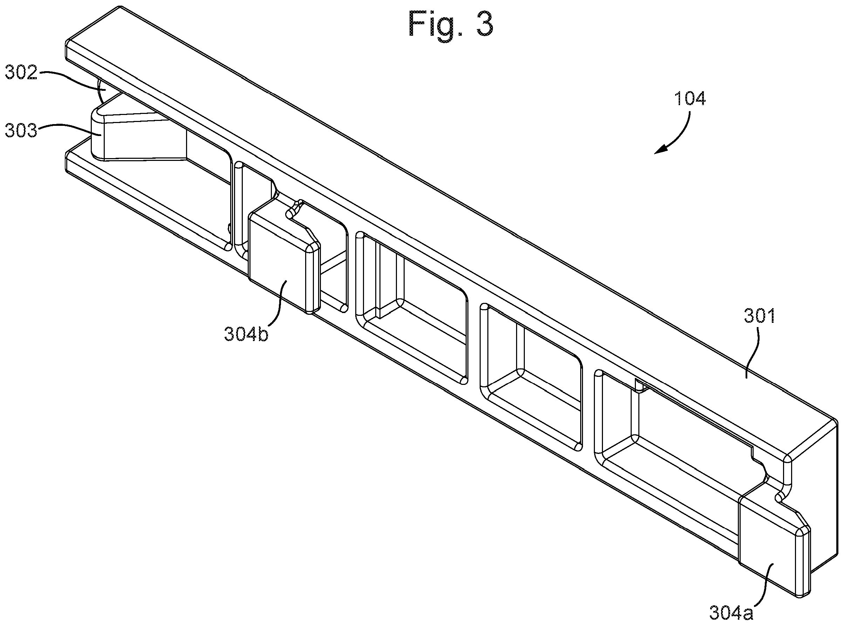

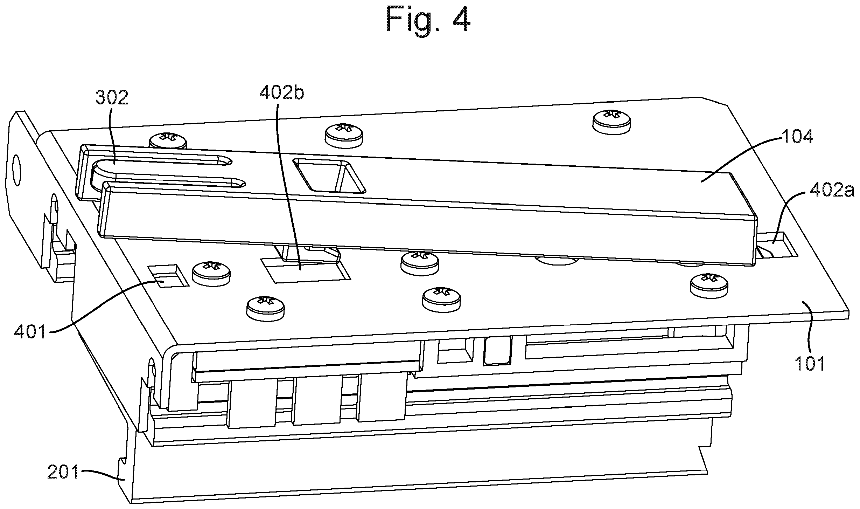

Fig. 3 shows a rear perspective view of the support 104. In the present embodiment, the support 104 comprises an elongate bar 301 that extends along the depth of the panel 101. The support 104 is made of any suitable material and is formed as a unitary component. A resilient leg 302 is formed at one end in the upper surface of the bar 301 (more clearly shown in Fig. 4). The resilient leg 302 is defined in a cut-out portion formed between two parallel sides of the bar 301. The resilient leg 302 comprises an engagement protrusion 303 that extends downwards from the lower surface of the resilient leg 302. The engagement protrusion 303 has a flat surface on one side and a sloping surface on the other side.

The support 104 also comprises protruding pegs 304a, 304b formed in the lower surface of the bar 301. In the present embodiment, the protruding peg 304a is formed at an end opposite the end containing the resilient leg 302 and extends outwards from the bar 301. The protruding peg 304b is formed part-way along the length of the bar 301, adjacent the resilient leg 302. Both protruding pegs 304a, 304b have a flat lower surface and a partly sloped upper surface.

Fig. 4 shows the support 104 being attached to a side of the panel 101. In the present embodiment, the panel 101 comprises an engagement notch 401 formed near an edge of the panel 101. The engagement notch 401 is dimensioned such that it can contain the engagement protrusion 303 formed in the resilient leg 302 of the support 104. The panel 101 also includes engagement slots 402a, 402b. The engagement slot 402a is formed at the rear end of the panel 101 and the engagement slot 402b is formed part way along the length of the panel 101, adjacent the engagement notch 401. The engagement slots 402a, 402b are dimensioned such that they allow insertion of the protruding pegs 304a, 304b into them. The engagement notch 401 and the engagement slots 402a, 402b are colinear on the surface of the panel 101. It is to be understood that the number and position of the engagement notch 401 and the engagement slots 402a, 402b on the panel 101 may be altered.

To fix the support 104 to the panel 101, a user aligns the support 104 onto the side of the panel 101, as shown in the figure, and pushes the protruding pegs 304a, 304b into the engagement slots 402a, 402b. At this stage, the engagement protrusion 303 abuts the side of the panel 101 and the resilient leg 302 is elastically deformed. Once the protruding pegs 304a, 304b are contained in the engagement slots 402a, 402b, the user slides the bar 301 along the panel 101 until the engagement protrusion 303 formed in the resilient leg 302 clicks into place in the engagement notch 401 on the panel 101. Once engaged, it is securely held in place in 2 axes by the protruding pegs 304a and 304b and in the remaining axis by the engagement protrusion 303. Partly sloped surfaces of the protruding pegs 304a, 304b enable smooth sliding into the slots 402a, 402b and once engaged they are held in place. Moreover, the spacing between the pegs 304a, 304b and underside of the bar 301 is preferably less than or equal to the thickness of the panel 101 to enable a snug fit. Furthermore, due to the resistance offered by the flat back surfaces of the resilient leg 303 and the pegs 304, the bar 301 is rigidly held in the notch 401 and the slots 402 and does not slide outwards.

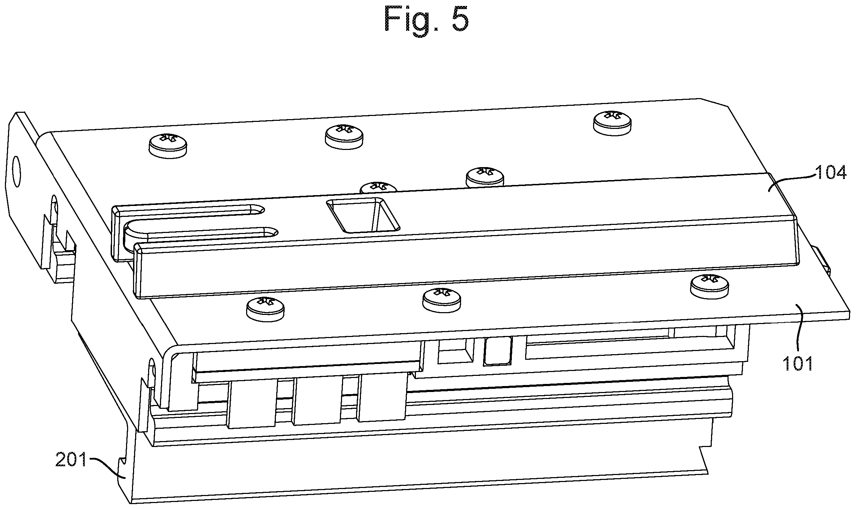

Fig. 5 shows the support 104 attached to the panel 101. When fixed, the support 104 extends along the length of the panel 101 and is rigidly held in place by the engagement protrusion 303 and the protruding pegs 304. The flat surface of the engagement protrusion 303 in the direction of the force prevents sliding of the engagement protrusion 303 from the engagement notch 401.

When it is needed to re-configure the cabinet 100, the support 104 can be easily removed from the panel 101. To disengage the engagement protrusion 303 from the engagement notch 401, the user exerts a force on the resilient leg 302 perpendicular to the panel 101. Once it is disengaged, the user simply slides the bar 301 towards the front of the panel 101 and pulls out the protruding pegs 304a, 304b from the respective slots 402a, 402b. The removed support 101 can then be fixed elsewhere on any panel 101 in the cabinet 100 as required.

A drawer is held over the support 104 attached to the panel 101 on the left-hand side and the guide block 201 attached to the adjacent panel 101 on the right-hand side. As shown in Fig. 6A, the lower right side of the drawer 103 has an engagement rail 601 which engages with a corresponding rail formed on the guide block 201, and the lower left side of the drawer 103 has a projecting rib 602 which allows the drawer to be supported on the support 104. In the drawer 103, the projecting rib 602 is formed as an extension along the left-hand side wall of the drawer. In a large drawer (double-height or triple-height), the distance between the projecting rib 602 on the drawer 103 and the support 104 is greater than that in a standard drawer (single-height). Therefore, the large drawer may not be well-supported by the support 104.

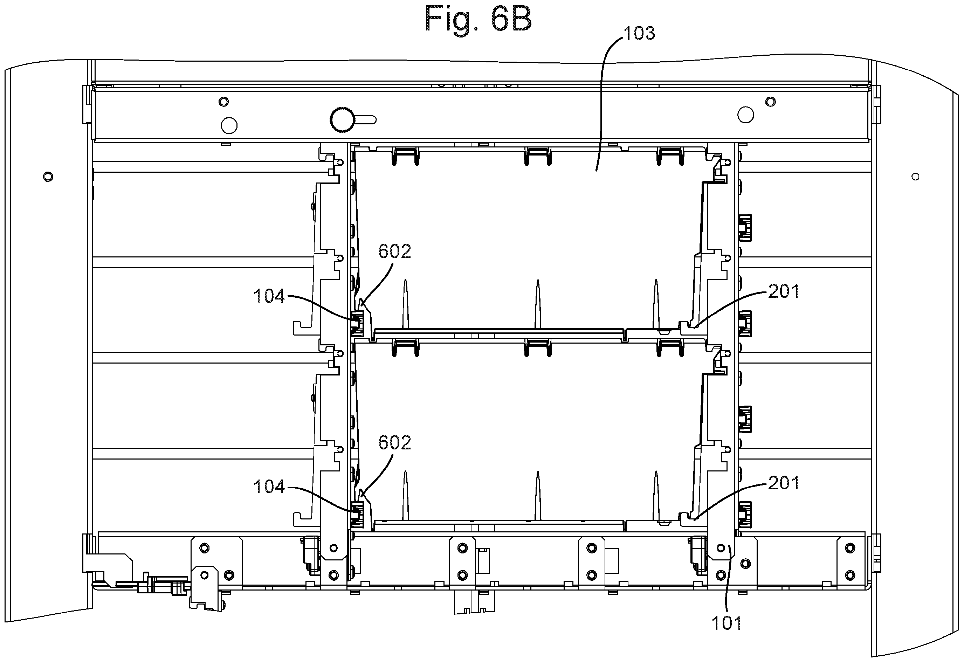

To address this issue, the projecting rib 602 in the large drawer is moved slightly further to the left as shown in Fig. 6B. By moving the projecting rib 602 to the left, the distance between the rib 602 and the support 104 is reduced and the drawer 103 can be sufficiently supported on the support 104. This allows all types of drawers to be supported on the same support 104 without having to install different sized supports 104. It is to be understood that larger guide blocks 201 would still be needed to accommodate larger drawers. As shown in Fig. 6A, the right-hand side panel 101 is set up for holding four single-height drawers 103 on its left-hand side and is fitted with four standard sized guide blocks 201 on its left-hand side. However, as shown in Fig. 6B, the right-hand side panel 101 is set up for holding two double-height drawers 103 and is fitted with two large guide blocks 201 on its left-hand side. But in both Figs. 6A and 6B, the panels 101 are fitted with identical supports 104.

The support 104 of the present invention offers significant advantages in terms of costs and convenience. First and foremost, as the support 104 is a simple unitary component with self-contained engagement features to attach it to the panel 101, it is easy to install during initial assembly or re-configuration of the cabinet 100. There is no need for screws or any other fastening means to secure it to the panel 101, thus saving costs and assembly time. Moreover, as the support 104 is provided with the resilient leg 302, it is easily to remove it from the panel 101 when needed and fix it elsewhere on any panel 101 in the cabinet 100. Furthermore, with slight modification in the drawers 103, the same support 104 can be used for any drawer size in the cabinet 100. There is no need to stock supports of different sizes and it is easy to re-configure the cabinet 100 with different sized drawers without having to change the supports 104. Therefore, the support 104 reduces costs further by eliminating the need for additional components such as screws needed in assembling the cabinet 100.

Those skilled in the art will recognise that the support 104 of the present invention has a wide variety of different applications, from storage cabinets to other units in which something is to be supported between two panels. For example, such supports 104 can be used in simple shelves where flat storage slabs could be supported on two supports 104 provided on either side.

The foregoing description has been given by way of example only and it will be appreciated by a person skilled in the art that modifications can be made without departing from the scope of the present invention as defined by the appended claims.

The resilient leg 302 can be formed with different size. Furthermore, the support 104 may be formed of varying thickness such that it can be fixed to the panel 101 either with the thin side up to support standard drawers or with the thick side up to support large drawers.

The foregoing description of illustrated embodiments of the present invention, including what is described in the abstract, is not intended to be exhaustive or to limit the invention to the precise forms disclosed herein. While specific embodiments of the invention are described herein for illustrative purposes only, various equivalent modifications are possible within the scope of the present invention as defined by the appended claims, as those skilled in the relevant art will recognise and appreciate.

## Claims

1. A support component (104) for supporting a drawer in a storage cabinet formed as a unitary component comprising:
an elongate bar (301);
a resilient leg (302) formed in a cut-out portion in the upper surface at one end of the bar and extending between two opposite sides of the bar, wherein the resilient leg comprises an engagement protrusion (303); and
at least one protruding peg (304a, 304b) extending downwards from the lower surface of the bar,
wherein the engagement protrusion extends downwards from a lower surface of the resilient leg and has a flat surface on a side further from the at least one protruding peg and a sloping surface on a side closer to the at least one protruding peg.

2. A support component (104) according to claim 1, wherein the protruding peg (304a) is formed at the other end of the bar.

3. A support component according to claim 1 or claim 2, wherein the protruding peg (304b) is formed part way along the length of the bar (301) and adjacent the resilient leg (302).

4. A storage cabinet (100) comprising:
at least one storage unit (103) in the form of a drawer
adapted to be held between panels (101) mounted onto support beams (102); and
the support component (104) according to any one of the preceding claims, wherein the support component is adapted to be fixed to a side of at least one of the panels such that the storage unit is at least partially supported on the support component.

5. A storage cabinet (100) according to claim 4, wherein at least one of the panels (101) comprises an engagement notch (401) adapted to contain the engagement protrusion (303) formed in the resilient leg (302) of the support component (104).

6. A storage cabinet (100) according to claim 4 or claim 5, wherein at least one of the panels (101) comprises at least one engagement slot (402a, 402b) adapted to engage with the protruding peg (304a, 304b) formed in the support component (104).

7. A storage cabinet (100) according to claim 6, wherein the engagement notch (401) and the engagement slot (402a, 402b) are colinear.

8. A storage cabinet (100) according to any one of claims 4 to 7, wherein each of the panels (101) is adapted to hold a guide block (201) on the side opposite the support component (104).

9. A storage cabinet according to any one of claims 4 to 8, wherein the storage unit comprises a projecting rib formed on the bottom surface of the storage unit such that the projecting rib is adapted to rest on the top of the support component attached to the panel.

## Patentansprüche

1. Stützkomponente (104) zum Stützen einer Schublade in einem Aufbewahrungsschrank, der als eine einheitliche Komponente gebildet ist, umfassend:
eine längliche Leiste (301);
einen elastischen Schenkel (302), der in einem ausgeschnittenen Abschnitt in der oberen Oberfläche an einem Ende der Leiste gebildet ist und sich zwischen zwei entgegengesetzten Seiten der Leiste erstreckt, wobei der elastische Schenkel einen Eingriffsfortsatz (303) umfasst; und
mindestens einen vorstehenden Zapfen (304a, 304b), der sich von der unteren Oberfläche der Leiste nach unten erstreckt,
wobei sich der Eingriffsfortsatz von einer unteren Oberfläche des elastischen Schenkels nach unten erstreckt und eine flache Oberfläche an einer Seite, die von dem mindestens einen vorstehenden Zapfen weiter entfernt ist, und eine schräge Oberfläche an einer Seite, die dem mindestens einen vorstehenden Zapfen näher ist, aufweist.

2. Stützkomponente (104) nach Anspruch 1, wobei der vorstehende Zapfen (304a) an dem anderen Ende der Leiste gebildet ist.

3. Stützkomponente nach Anspruch 1 oder Anspruch 2, wobei der vorstehende Zapfen (304b) Teil des Wegs entlang der Länge der Leiste (301) und neben dem elastischen Schenkel (302) gebildet ist.

4. Aufbewahrungsschrank (100), umfassend:
mindestens eine Lagereinheit (103), in der Form einer Schublade, die angepasst ist, zwischen Panels (101) gehalten zu werden, die auf Stützbalken (102) montiert sind; und
die Stützkomponente (104) nach einem der vorstehenden Ansprüche, wobei die Stützkomponente angepasst ist, an einer Seite mindestens eines der Panels fixiert zu werden, sodass die Lagereinheit mindestens teilweise auf der Stützkomponente gestützt wird.

5. Aufbewahrungsschrank (100) nach Anspruch 4, wobei mindestens eines der Panels (101) eine Eingriffskerbe (401) umfasst, die angepasst ist, den Eingriffsfortsatz (303) zu beinhalten, der in dem elastischen Schenkel (302) der Stützkomponente (104) gebildet ist.

6. Aufbewahrungsschrank (100) nach Anspruch 4 oder Anspruch 5, wobei mindestens eines der Panels (101) mindestens einen Eingriffsschlitzt (402a, 402b) umfasst, der angepasst ist, mit dem vorstehenden Zapfen (304a, 304b) in Eingriff zu gelangen, der in der Stützkomponente (104) gebildet ist.

7. Aufbewahrungsschrank (100) nach Anspruch 6, wobei die Eingriffskerbe (401) und der Eingriffsschlitz (402a, 402b) kollinear sind.

8. Aufbewahrungsschrank (100) nach einem der Ansprüche 4 bis 7, wobei jedes der Panels (101) angepasst ist, einen Führungsblock (201) an der Seite zu tragen, die der Stützkomponente (104) entgegengesetzt ist.

9. Aufbewahrungsschrank nach einem der Ansprüche 4 bis 8, wobei die Lagereinheit eine vorstehende Rippe umfasst, die auf der Bodenfläche der Lagereinheit gebildet ist, sodass die vorstehende Rippe angepasst ist, auf der Oberseite der Stützkomponente zu ruhen, die an dem Panel befestigt ist.

## Revendications

1. Composant de support (104) destiné à supporter un tiroir dans une armoire de stockage formée comme un composant unitaire :
une barre allongée (301) ;
une jambe élastique (302) formée dans une portion découpée dans la surface supérieure à une extrémité de la barre et s'étendant entre deux côtés opposés de la barre, dans lequel la jambe élastique comprend une saillie d'engagement (303) ; et
au moins une cheville en saillie (304a, 304b) s'étendant vers le bas à partir de la surface inférieure de la barre,
dans lequel la saillie d'engagement s'étend vers le bas à partir d'une surface inférieure de la jambe élastique et présente une surface plate sur un côté plus éloigné de l'au moins une cheville en saillie et une surface inclinée sur un côté plus proche de l'au moins une cheville en saillie.

2. Composant de support (104) selon la revendication 1, dans lequel la cheville en saillie (304a) est formée à l'autre extrémité de la barre.

3. Composant de support selon la revendication 1 ou la revendication 2, dans lequel la cheville en saillie (304b) est formée partiellement le long de la longueur de la barre (301) et de façon adjacente à la jambe élastique (302).

4. Armoire de stockage (100) comprenant :
au moins une unité de stockage (103) sous la forme d'un tiroir adapté pour être maintenu entre des panneaux (101) montés sur des bras de support (102) ; et
le composant de support (104) selon l'une quelconque des revendications précédentes, dans lequel le composant de support est adapté pour être fixé à un côté de l'un au moins des panneaux de telle façon que l'unité de stockage est au moins partiellement supportée sur le composant de support.

5. Armoire de stockage (100) selon la revendication 4, dans laquelle l'un au moins des panneaux (101) comprend une encoche d'engagement (401) adaptée pour contenir la saillie d'engagement (303) formée dans la jambe élastique (302) du composant de support (104).

6. Armoire de stockage (100) selon la revendication 4 ou la revendication 5, dans laquelle l'un au moins des panneaux (101) comprend au moins une fente d'engagement (402a, 402b) adaptée pour s'engager avec la cheville en saillie (304a, 304b) formée dans le composant de support (104) .

7. Armoire de stockage (100) selon la revendication 6, dans laquelle l'encoche d'engagement (401) et la fente d'engagement (402a, 402b) sont colinéaires.

8. Armoire de stockage (100) selon l'une quelconque des revendications 4 à 7, dans laquelle chacun des panneaux (101) est adapté pour maintenir un bloc de guidage (201) sur le côté opposé au composant de support (104).

9. Armoire de stockage selon l'une quelconque des revendications 4 à 8, dans laquelle l'unité de stockage comprend une nervure en saillie formée sur la surface inférieure de l'unité de stockage de telle façon que la nervure en saillie est adaptée pour reposer sur le dessus du composant de support fixé au panneau.
